## Europäisches Patentamt
## European Patent Office
## Office européen des brevets

(19)

(11) Publication number: **0 010 303** .A1

(12)

# EUROPEAN PATENT APPLICATION

(21) Application number: **79104034.8**

(22) Date of filing: **18.10.79**

(51) Int. Cl.³: **G 08 C 19/40**
**G 01 D 5/20**

(30) Priority: **19.10.78 US 952928**

(43) Date of publication of application:
**30.04.80 Bulletin 80/9**

(84) Designated Contracting States:
**AT BE CH DE FR GB IT LU NL SE**

(71) Applicant: **United Airlines, Inc.**
**Elk Grove Village, Illinois(US)**

(72) Inventor: **Gibson, James E.**
**455 Iris Street**
**Redwood City, California 94062(US)**

(74) Representative: **Dres. Kador & Klunker et al,**
**Knöbelstrasse 36**
**D-8000 München 22(DE)**

(54) **Signal conditioner.**

(57) There is described a signal conditioner circuit particularly useful in aircraft instrumentation applications for transforming the signals generated by a second harmonic, saturable core, angular transducer 10 into two direct current 1,2 signals containing information giving the angular position of the transducer which signals may be easily recorded and/or further processed to give a direct reading of angular position. The circuit includes two bandpass filters 92,/72 tuned to twice the frequency of the signal exciting the transducer with each coupled to a tap on the transducer winding. The outputs of the bandpass filters are detected by sampling them at times lagging the zero-crossings of the exciting signal by approximately 45 degrees.

BAD ORIGINAL

.1...

FIG. IA

## SIGNAL CONDITIONER

### Background of the Invention

Second harmonic, saturable core, angular transducers are well known and have found widespread use
particularly in the aircraft instrumentation field for
providing a remote indication of the position of a rotatable
shaft or some related quantity.  Such transducers are
generally used in pairs and in situations where they can be
driven by a common excitation signal.  In the usual installation, one transducer of the pair is used as a transmitter
and the other as a receiver.  The transmitter is coupled to
a rotatable shaft and the receiver is coupled to some type
of rotating pointer or indicator so that any change in the
angular position of the shaft at the transmitter will result
in a corresponding change in the position of the pointer or
indicator.  One particular application where such transducers have been used is in the provision to the cockpit
crew of a visual indication of the rate of fuel flow to an
aircraft engine.  Such transducers are already in place on
many commercial aircraft presently in use.

With increases in the cost of aircraft fuel and an
increased desire to conserve such fuel, it has become
desirable to acquire information concerning the rate of fuel
flow to aircraft engines in a form such that the information
can both be further processed or analyzed and recorded using
conveniently available recording apparatus.  For example,
the fuel flow information might be combined with airspeed information to yield an indication to the cockpit crew of the present miles or knots per gallon or pound of fuel burned. Alternatively, the data acquired might be recorded along with numerous other features of interest such as altitude, attitude, outside air temperature, etc., so that the data may be subsequently analyzed and compared with data developed at different times during the same flight, on different flights of the same aircraft, on flights by different aircraft, etc., to develop and optimize various flight procedures and operations. It is highly desirable, of course, that the necessary information be acquired as inexpensively as possible and, in particular, it is desirable that the data be acquired using instrumentation which is already in place and operational on the aircraft.

Accordingly, there are provided by this invention signal conditioner circuits for coupling to second harmonic, saturable core, angular transducers which circuits transform the alternating current signals provided by the transducers into direct current signals containing information required to determine the angular position of the transducer. The circuits include bandpass filters for selecting from the transducer outputs the signal components at twice the frequency of the signal driving the transducer and phase sensitive detection circuits to detect the amplitude of the double frequency signals at times fixed with respect to the phase of the signal exciting the transducer.

It is an object of this invention to provide a signal conditioner circuit useful with pre-existing second harmonic, saturable core, angular transducers for converting the transducer output signals into direct current signals including the information required to determine the angular position of the transducer.

It is an object of this invention to provide signal conditioner circuits useful with pre-existing second harmonic, saturable core, angular transducers for converting the information contained in the signals generated thereby into a form which may be conveniently further processed or analyzed with additional circuitry and/or may be conveniently recorded using known data recording apparatus.

It is an object of this invention to provide such signal conditioner circuits which will operate reliably in an aircraft environment.

It is an object of this invention to provide such signal conditioner circuits capable of providing highly accurate results.

It is an object of this invention to provide such signal conditioner circuits which are of relatively simple design and economical to construct, install, and operate.

## Description of the Drawing

Figure 1 is a drawing in schematic form of a signal conditioner circuit of this invention drawn in two parts, Figs. 1A and 1B, with the lines represented by the same reference numbers being connected together; and

Fig. 2 is a graphical representation for use in explaining the operation of the signal conditioner circuit of Fig. 1.

## Description of the Preferred Embodiment

There is disclosed in the drawing a signal conditioner circuit making use of this invention for transforming the signals generated by a second harmonic, saturable core, angular transducer into two direct current signals containing information giving the angular position of the transducer which signals may be recorded and/or further processed to give a direct reading of said angular position. The disclosed signal conditioner is used with a transducer driven by a 400 Hertz signal such as is commonly found on aircraft and to provide an indication of such quantities as the rate of fuel flow to an aircraft engine. While only one particular signal conditioner of this invention is disclosed, it will be understood that the invention is not limited thereto but is instead to be measured by the claims which are appended to the end of this description and form a part of this specification.

A second harmonic, saturable core angular transducer is indicated generally at 10 in the drawing. The transducer 10 used with the signal conditioner disclosed in the drawing was one sold by General Electric Company in its TJ50 transducer series, specifically, one sold under the number 8TJ50GE_3. Similar transducers are also known by the name "Magnesyn". "Magnesyn" is registered as a trademark of Bendix Aviation Corporation. The transducer 10 includes a toroidal core 12 of magnetically saturable material with a single helical wire winding 14 wrapped about the core over practically its entire circumferance. The winding is connected to an excitation source 16, a source of 400 Hertz sine wave signal having one terminal thereof coupled to a circuit ground. Two taps are provided at positions located one-third and two-thirds of the way around core 12 from the extremeties of winding 14 and effectively divide that winding into three sections, the three sections being designated in the drawing as A, B, and C. A generally flat magnet 18, which may be either a permanent magnet or an electromagnet excited by a source of direct current, is located in the plane of the core 12 and is mounted for rotation about a center point 20. The magnet 18 is mechanically connected so that its angular position varies in response to a parameter to be measured and it is that angular position which is detected by the transducer 10. In the apparatus for which the signal conditioner of the drawing was specifically designed, the magnet 18 was mechanically coupled to the output shaft of a spring actuated fuel flow meter located in an aircraft fuel line so that the angular position of the magnet varied in response to the rate of fuel flow through the meter.

In the conventional and well known use of second harmonic, saturable core transducers, a second transducer constructed like transducer 10 is connected to the same excitation source 16 and the taps on the second transducer are connected to the similarly located taps on transducer 10. The magnet included within the second transducer will then assume an angular position which corresponds to that of the magnet 18 in the first transducer and variations in the angular position of magnet 18 will cause similar variations in the angular position of the magnet in the second transducer. The magnet of the second transducer is then commonly connected to a pointer which is read against an appropriate scale by the operator to yield a reading of the quantity being measured. Such operation is discussed, for example, in Childs, "Magnesyn Remote Indication", Transactions of the American Institute of Electrical Engineers, vol. 63, September 28, 1944 which is incorporated herein by reference. However, such operation is not suitable when it is desired to maintain a permanent and continuous record of the parameter being measured by the transducer or when it desired to make further use of the information obtained concerning the parameter being measured. The signal conditioner 30 of the drawing converts the signals generated by the transducer 10 into d.c. signals which may easily be recorded by conventional data recording equipment, which may be further analyzed to develop an output directly representative of the quantity being measured, and which may be conveniently used as inputs to additional electrical equipment.

The signal conditioner 30 of the drawing includes first and second signal inputs 32 and 34 each coupled to one of the taps on the transducer coil and a reference input 36 coupled to the ungrounded side of excitation source 16. The signal at the reference input 36 is amplified by an amplifier circuit 38 which comprises an operational amplifier 40. The input 36 is coupled through a resistor 42 to the inverting input of that amplifier while the noninverting input thereof is coupled to ground through a resistor 44. A feedback resistor 46 is connected from the output of amplifier 40 to the inverting input thereof and that some input has a pair of back-to-back diodes 48 and 50 connected between it and ground. The signal at the second signal input 34 is amplified by an amplifier circuit 52 comprising an operational amplifier 54, resistors 56, 58, and 66, and back-to-back diodes 62 and 64 connected together as in amplifier circuit 38. The signal at the first signal input 32 is amplified by a summer amplifier circuit 66 comprising an operational amplifier 68, resistors 70, 72, and 74, and back-to-back diodes 76 and 78 also connected together an amplifier circuit 38. The summer amplifier circuit 66 additionally includes a resistor 79 coupling the output of operational amplifier 40 to the inverting input of an operational amplifier 68. The output of operational amplifier 54 is coupled to another amplifier circuit 80 comprising an operational amplifier 82. The output of amplifier 54 is coupled through a resistor 84 to the inverting input of an operational amplifier 82 and a feedback resistor 86 is coupled between the output and the inverting input of that amplifier. The output of operational amplifier 40 is coupled to the noninverting input of amplifier 82 through a resistor 88 and that same input has a resistor 90 connected from it to ground.

The outputs of amplifiers 68 and 82 are coupled through 800 Hertz bandpass filters 92 and 94 to the inputs of samplers 96 and 98, respectively, and the sampler outputs are coupled through buffer amplifiers 100 and 102 to outputs 104 and 106, respectively. Bandpass filter 92 includes a resistor 108 coupling the output of amplifier 68 to a circuit point 110 and a capacitor 112 coupling that circuit point to the inverting input of an operational amplifier 114. A feedback resistor 116 is connected between the output of amplifier 114 and the inverting input thereof and a feedback capacitor 118 is coupled from that same output to circuit point 110. The noninverting input of operational amplifier 114 is connected directly to ground and circuit point 110 is connected to ground through a resistor 120. Bandpass filter 94 includes resistors 122, 130, and 134, circuit point 124, capacitors 126 and 132, and an operational amplifier 128 connected together in the same manner as in the bandpass filter 92. Sampler 96 comprises a switch element 136 having its input coupled to the output of operational amplifier 114. Switch element 136 is one output circuit of an analog switch circuit 138. The output of switch element 136 is coupled through a resistor 140 to one terminal of a capacitor 142 having its other terminal coupled to ground. The junction of resistor 140 and capacitor 142 is coupled to the noninverting input of an operational amplifier 144 included within buffer amplifier 100. The output of operational amplifier 144 is connected directly to the inverting input thereof and through the series combination of a resistor 146 and a potentiometer 148 to ground. The tap of potentiometer 148 is coupled through a resistor 150 to output 104. The sampler 98 and buffer amplifier 102 include a switch element 152 which is another output element of analog switch 138, resistors 154, 160, and 164, capacitor 156, operational amplifier 158, and potentiometer 162 connected together in the same manner as in sampler 96 and buffer amplifier 100.

The analog switch 138 is driven by a signal whose timing is fixed with respect to the signal at the reference signal input 36. The output of amplifier circuit 38 is filtered by a 400 Hertz bandpass filter 170 and applied through a phase shift circuit 171 to a zero-crossing detector 172, and the output of zero-crossing detector 172 is used to trigger a one-shot circuit 174 which, in turn, operates the analog switch circuit 138. The bandpass filter 170 includes resistors 176, 188, and 184, a circuit point 178, capacitors 180 and 186, and an operational amplifier 182 connected together in the same manner as in bandpass filters 92 and 94. The output of amplifier 182 is applied through a resistor 189 to a circuit point 190 in phase shift circuit 171. A capacitor 191 is coupled between circuit point 190 and ground. Circuit point 190 is coupled to the inverting input of an operational amplifier 192 and the noninverting input of an operational amplifier 194 in the zero-crossing detector 172. The noninverting input of operational amplifier 192 and the inverting input of operational amplifier 194 are both connected directly to ground. The output of each of operational amplifiers 192 and 194 are coupled to the cathodes of diodes 198 and 200, respectively, and the anodes of those two diodes are coupled together at circuit point 202. A resistor 204 is connected between circuit point 202 and ground. The output of the zero-crossing detector 172 is taken from circuit point 202 and coupled through the series combination of a capacitor 206 and a resistor 208 to the base of a transistor 210 included in the one-shot circuit 174. The base of transistor 210 is coupled to the cathode of a diode 211 having its anode coupled to ground and the emitter of transistor 210 is coupled to ground. The collector of transistor 210 is coupled to a source of positive potential +V through a load resistor 212. The collector of transistor 210 is coupled through a capacitor 214 to a circuit point 215. A resistor 216 is coupled between circuit point 215 and the source of positive potential +V. A resistor 218 couples the signal at circuit point 215 to both the control inputs of a dual analog switch 220 included within analog switch circuit 138. The control inputs of analog switch 220 are also connected to the cathode of a diode 222 having its anode coupled to ground and to the anode of a diode 224 having its cathode coupled to the source of positive potential +V. The appropriate supply inputs of analog switch 220 are also coupled to ground through a resistor 226, to the source of positive potential +V through a resistor 228, to a source of negative potential -V through a resistor 230. A resistor 232 is connected from the reference input of analog switch 220 to the positive supply input thereof and sets the voltage level on the control inputs at which the switch 220 will change states. Each of operational amplifiers 40, 54, 68, 82, 114, 128, 144, 158, 182, 192, and 194 must also be connected to appropriate positive and negative potential supply sources.

The magnet 18 in the transducer 10 is effective to partially saturate the core 12 but the flux flow through the core is in opposite directions on opposite sides of the magnet. Thus, the 400 Hertz signal in winding 14 is effec- tive to fully saturate opposite sides of core 12 during its positive going and negative going half cycles with the result that a signal at twice the frequency of that of excitation source 16, i.e., a signal at 800 Hertz, is induced in each section of winding 14 and signals at this frequency are present at the two taps on winding 14. (At any instant, the sum of the potentials of the double frequency signals across the three sections of winding 14 will be zero, of course.) The relative magnitudes of the double frequency potentials across the individual winding sections will vary according to the angular position of magnet 18 as is explained in the aforementioned Childs reference, and the relative magnitudes of the potentials of the double frequency signals present at those taps will vary similarly. Each tap also has thereat a signal at the excitation frequency, the signal at one tap at any instant being at a potential of approximately one third of the excitation potential and the signal at the other tap being approximately two-thirds of the excitation signal potential.

The signal conditioner 30 is operative to produce at outputs 104 and 106 direct current potential signals which vary in magnitude according to the relative potential of the double frequency signals appearing at the taps on winding 14 of the transducer 10. The double frequency signals are effectively amplitude demodulated by sampling their relative values at times fixed with respect to the 400 Hertz excitation signal. The apparatus disclosed in the drawing was designed for use with a transducer excited by a 400 Hertz signal at approximately 115 volts r.m.s. and produced at the two taps thereof signals of approximately 40 volts r.m.s. and 65 volts r.m.s. Amplifier circuit 38 coupled to the excitation source 16 is effective to produce at its output a 400 Hertz signal at practically the same phase as the signal produced by the excitation source but reversed in polarity and scaled down to a voltage level which is more convenient to work with. Amplifier circuit 52 coupled to the tap on winding 14 which is closer to ground is similarly effective to produce at its output the signal
present at that tap but inverted in polarity and scaled down
to a more convenient voltage level. Summer amplifier
circuit 66 is coupled to the tap on winding 14 which is more
removed from ground and performs the same function as
amplifier circuit 52 but the 400 Hertz signal applied
thereto from the output of amplifier 40 is effective to
cancel out a large portion of the 400 Hertz signal from the
output of differential amplifier 68, and, thus, from the
output of bandpass filter 92. The back-to-back diodes
coupled to the inverting inputs of each of differential
amplifiers 40, 54, and 68 protect those inputs from voltage
extremes when power is being applied to or removed from the
system. Amplifier circuit 80 is effective to again invert
in polarity and further scale the signal applied thereto
from the output of operational amplifier 54. The 400 Hertz
signal applied to the noninverting input of operational
amplifier 82 is also effective to remove a large portion of
the 400 Hertz signal from the output of operational amplifier
82, and, thus, from the output of bandpass filter 92. The
800 Hertz bandpass filters coupled to the outputs of operational
amplifiers 68 and 82 both further suppress the 400 Hertz
signal components as well as any signal components above 800
Hertz from the signals applied thereto and supplied to the
samplers 96 and 98.

The output of operational amplifier 40 is applied
through the 400 Hertz bandpass filter 170 to the phase-shift
circuit 171, and thence to the zero-crossing detector 172.
The 400 Hertz bandpass filter 170 suppresses extraneous
signals which might be present in the output of operational
amplifier 40. Resistor 190 and capacitor 196 are operative
to retard thephase of the signal applied to the zero-
crossing detector by approximately 45°. The phase-shift
circuit 171 may also be used to compensate for slight phase
variations introduced by the amplifier circuits. The zero-
crossing detector 172 is essentially comprised of two very
high gain amplifiers coupled in parallel. Whenever the signal applied to the input thereof is either very far above or below ground, one of amplifiers 192 or 194 is effective through the diode coupled to its output to maintain circuit point 202 at the negative supply potential with diode 212 being operative to permit capacitor 206 to charge. However, when the potential at the input of the zero-crossing detector approaches and passes through zero in either the positive or the negative going directions, neither of the outputs of differential amplifiers 192 and 194 are at the negative supply potential and circuit point 202 is effectively held at approximately ground potential by resistor 204 for a short period of time. A positive going pulse is thus applied to the base of transistor 210 as capacitor 206 discharges through resistor 208 and the base-emitter junction of that transistor causing capacitor 214 to be coupled to ground through the collector-emitter circuit of transistor 210. A negative going ground level pulse is thus generated at circuit point 215 the duration of which is determined by the rate at which capacitor 214 is charged through resistor 216. That pulse is applied to the input of analog switch 220 causing switch elements 136 and 152 to be closed for the duration thereof. Diodes 222 and 224 limit any transients appearing at the control inputs to the analog switch and prevent the potential at those inputs from becoming excessively positive or negative. The time constants of the circuits are chosen so that the switch elements 136 and 152 are closed for a period of approximately 100 µsec at approximately 45° following the occurrance of each zero crossing of the 400 Hertz signal. The one-shot circuit 174 is useful to adjust the pulses applied to analog switch 138 to the desired duration, but in some applications of this invention its use may not be necessary.

Each time the switch elements 136 and 152 are closed, the outputs of operational amplifiers 114 and 128 are coupled through the associated ones of resistors 140 and 154 to capacitors 142 and 156, respectively, permitting the capacitors to either charge or discharge through the associated resistors to the potential at the outputs of the operational amplifiers. When the switch elements are open, the potentials across capacitors 142 and 156 remain essentially constant at the potentials to which they were charged during the most recent closure of the switch elements. Resistors 140 and 154 prevent the potentials across capacitors 142 and 156 from changing excessively rapidly during a single closure of the switch elements and, thus, filter out high frequency noise when it is known that the physical quantity being sensed by the transducer 10 varies at a slow rate compared to the frequency at which sampling occurs. Buffer amplifiers 100 and 102 develop at outputs 104 and 106 potentials proportional to those across the respective ones of capacitors 142 and 156. Potentiometers 146 and 160 permit adjustment of the overall gain of the signal conditioner 30.

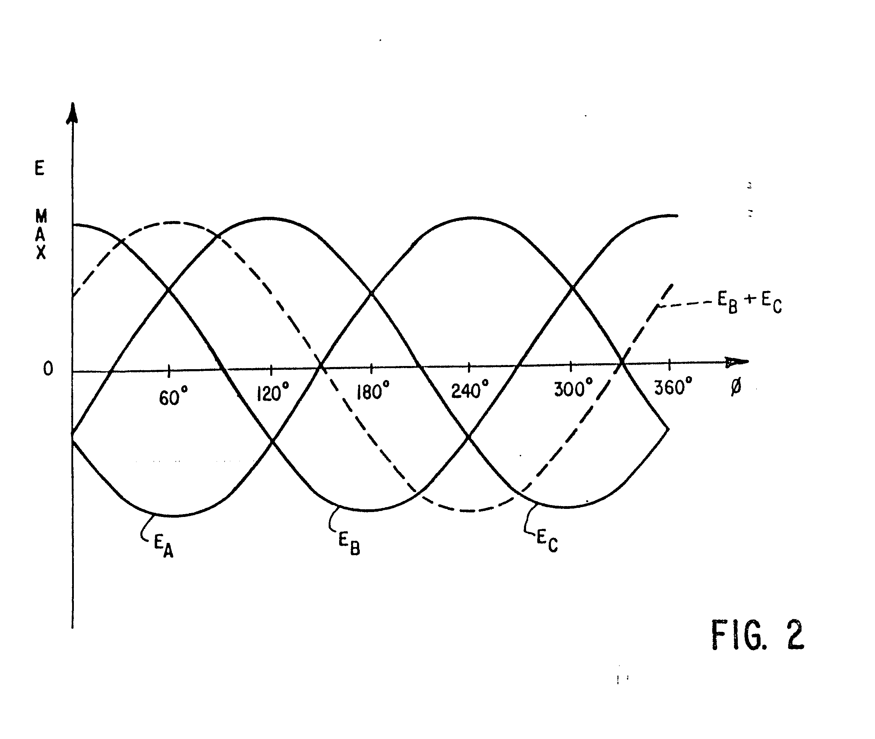

It will thus be seen that the signal conditioner 30 produces at its outputs 104 and 106 two direct current potential signals which vary in response to the relative magnitudes of the double frequency signals present at the taps of transducer 10. In Fig. 2 of the drawing there are shown three curves labelled $E_A$, $E_B$, and $E_C$ which represent the variations of the magnitudes of the double frequency signals present across the three sections A, B, and C of winding 14 with the relative angle $\emptyset$ of magnet 18. (The phases of each of those double frequency signals will, of course, be identical.) Also shown in Fig. 2 is a dashed curve labelled $E_B + E_C$ which represents the variation of the magnitude of the sum of the double frequency signals present across sections B and C of winding 14. Each of the curves of Fig. 2 is a sine-cosine function. The sum of the signals across windings B and C, of course, is applied to input 32 of the signal conditioner 30 and the signal across winding C is applied to input 34 of the signal conditioner 30. Once the signal conditioner is calibrated so that the maximum values of the signals at the outputs 104 and 106 are known for any angular position of the magnet 18, the signals at the outputs 104 and 106 can be further analyzed using the curves $E_C$ and $E_B + E_C$ to give a direct reading of the angular position of the magnet 18 and/or the physical quantity being measured. If in a particular application the rotation of magnet 18 is restricted to less than 180°, only one of the outputs is needed to determine its angular position. If the rotation of the magnet is not so restricted, both outputs are necessary to resolve the ambiguity which would result with only one output. It is apparent that any pair of the signals across any one section of winding 14 or any two sections of that winding may be used instead of the signals shown in the drawing. The further analysis of the signals present at the outputs 104 and 106 may be done by further electrical circuitry of the digital or analog variety. Such circuitry may either be connected directly to outputs 104 and 106, or the signals at those outputs may be recorded such as on magnetic tape for analysis at a subsequent time. If the data is to be recorded, of course, only the signals at outputs 104 and 106 need be recorded. In the absence of signal conditioner 30, to preserve the data it would be necessary to record the 400 Hertz driving signal and the signals at both taps of the transducer and preserve the phase relationship therebetween.

In one apparatus built in accord with the disclosure of the drawing, the listed components had the values or part identification numbers stated below:

| | |
|---|---|
| 42, 56, 70 | 100 Kohm, 2% |
| 44, 72, 90 | 6.2 Kohm, 1% |
| 46, 58, 60, 84 | 4.75 Kohm, 1% |
| 74, 86 | 12.1 Kohm, 1% |
| 79 | 15 Kohm, 5% |
| 88 | 10 Kohm, 5% |
| 108, 122 | 19.6 Kohm, 1% |
| 112, 118, 126, 132, 180, 186 | 0.1 μ farad |

| | |
|---|---|
| 116, 130, 176 | 40 Kohm, 1% |
| 120, 134 | 100 ohm |
| 140, 154 | 10.7 Kohm |
| 142, 156 | 0.5 μfd. |
| 148, 162 | 1 Kohm |
| 184 | 80 Kohm |
| 188 | 200 ohm |
| 191, 206 | 0.01 μfd |
| 204 | 4.7 Kohm |
| 150, 164, 208 | 1 Kohm |
| 212, 216 | 10 Kohm |
| 214 | 0.012 μfd |
| 218 | 47 Kohm |
| 226 228, 230 | 200 ohm, 5% |
| 232 | 22 Kohm, 5% |
| 48, 50, 62, 64, 76, 78, 198, 200, 211, 222, 224 | 1N914 |
| 210 | 2N2222A |
| 40, 54, 68, 82, 114, 128, 182, 192, 194 | LM741H |
| 144, 158 | Burr Brown 3540J |
| 220 | Siliconix DG-200AA |

The positive and negative supply potentials were plus and minus 15 volts with respect to the circuit ground. The value for resistor 189 was selected to obtain operation of the analog switch circuit 138 at the correct phase of the 400 Hertz signal applied to the reference input 36. The

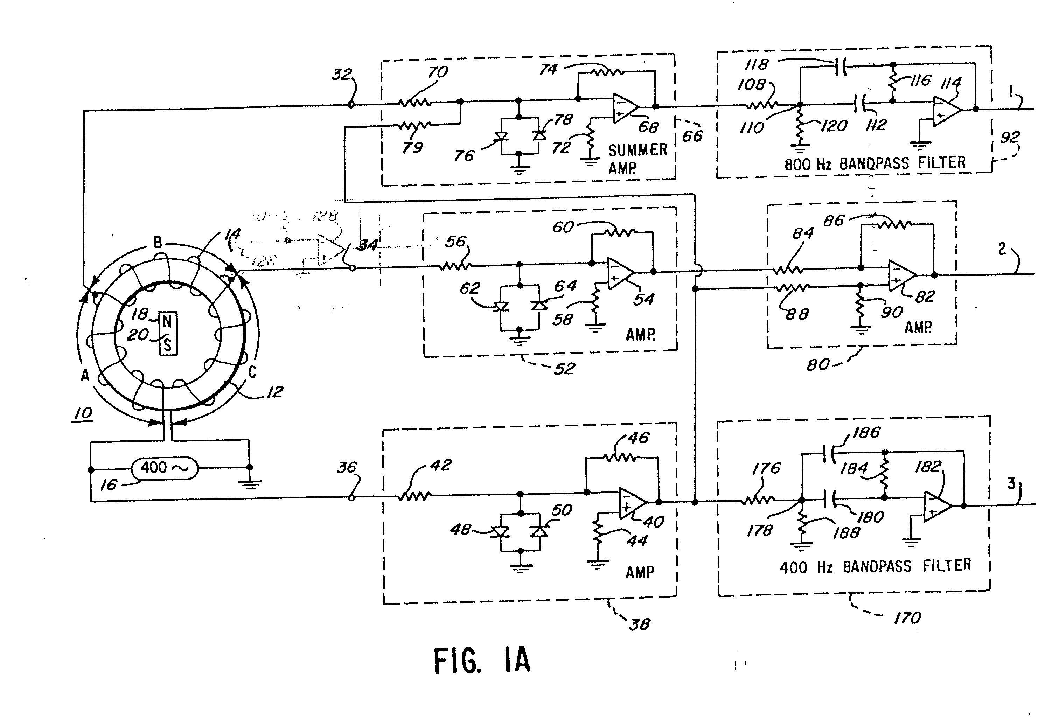

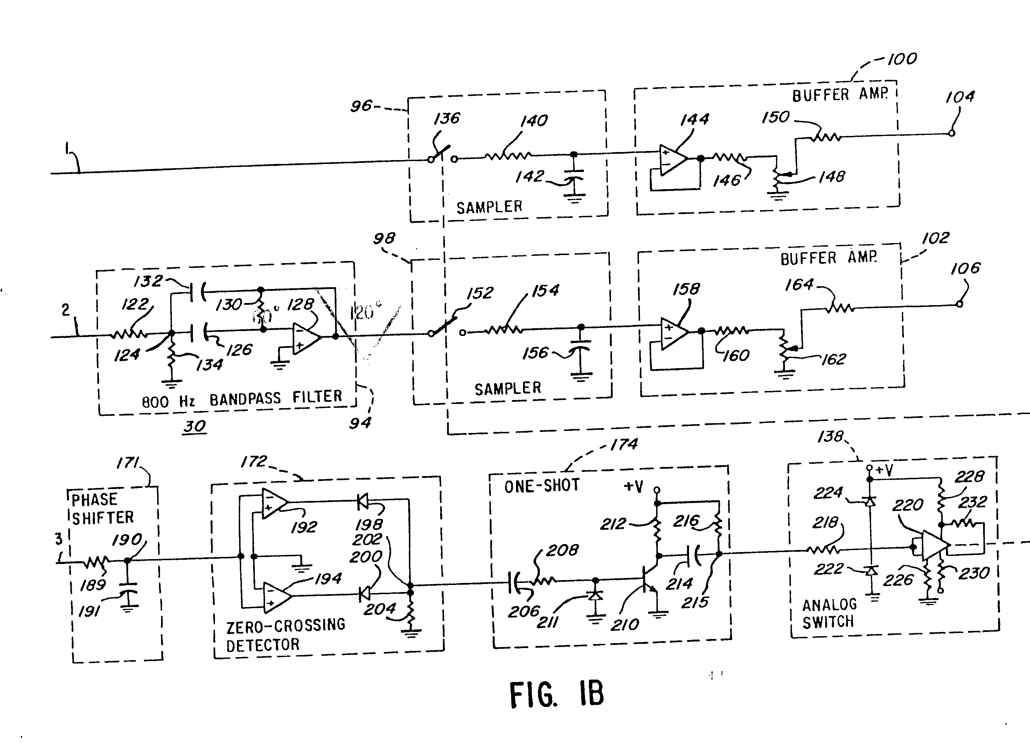

selected value of resistor may vary with such things as the values of other components used in the circuit. A signal conditioner constructed in accord with Fig. 1 and using the above-stated component values was accurate to approximate one-half of one percent.

It is apparent that many variations could be made in the circuitry shown in Fig. 1 for signal conditioner 30. One specific variation which is contemplated is the substitution for zero-crossing detector 172, one-shot circuit 174, analog switch circuit 138, and samplers 96 and 98 of a single phase sensitive demodulator integrated circuit. Such an integrated circuit is available under the type number MN 2120 from Micronetwork Corporation, 324 Clark Street, Worcester, Massachusetts. Further variations are also readily apparent. In some applications of this invention it might be found desirable to apply the output of amplifier circuit 38 to amplifier 52 to perform the cancellation of the 400 Hertz signal so that amplifier circuit 80 could be omitted. In some applications it might be found desirable to couple the inputs of bandpass filters 92 and 94 directly to the taps on winding 14 and the output of amplifier circuit 38 so that the bandpass filters would also perform both any voltage scaling required and the cancellation of the 400 Hertz signal, thereby permitting the elimination of the separate amplifier circuits 52, 66, and 80. In some applications it may be acceptable to omit the 400 Hertz bandpass filter 170, while in others the functions of the 400 Hertz bandpass filter 170 and the phase shifter 171 might be combined into a single circuit. In some applications it might be found desirable to provide a single output point which is time multiplexed between a signal representative of the potential at one tap on winding 14 and a signal representative of the potential at the other tap. In such applications, the multiplexing operation might be performed at a point in the signal conditioner circuit either before or after the samplers 96 and 98 and the signals might be sampled at different phases (e.g., 135° and 315°) with

respect to the '00 Hertz reference signal. The phase shift
provided by phase shifter 171 could be made a leading shift
rather than lagging. Further it might in some applications
be found desirable to eliminate phase shifter 71 and
instead include circuitry for introducing appropriate
phase shifts in the signal flow prior to samplers 96 and 98.

It will thus be seen that a signal conditioner
circuit has been provided which fulfills the above named objects
and various modifications of that circuit have been suggested.
It will be understood, of course, that the invention is
not limited to the disclosed embodiment or the suggested
modifications thereto. It is contemplated, therefore, by
the appended claims to cover any such modification as fall
within the true spirit and scope of this invention.

CLAIMS

1. A signal conditioner circuit for use with a second harmonic, saturable core transducer comprised of a magnetically saturable core, a magnetic rotor mounted for rotation with respect to said core, and a winding with taps located thereon disposed about said core and adapted for connection to an excitation signal source providing an alternating current driving signal to said winding at a first frequency, said signal conditioner circuit comprising:

first electrical filter circuit means having an input for coupling to a first tap on said winding and producing at an output thereof a signal in response to signal components at twice said first frequency present at the input thereof and suppressing signal components at said first frequency present at the input thereof; and

first phase sensitive detection means for coupling to said excitation signal source and coupled to said first electrical circuit means output for detecting the amplitude of the signal at said first electrical filter circuit means output at a phase fixed with respect to said driving signal.

2. The signal conditioner circuit of claim 1 further comprising:

second electrical filter circuit means having an input for coupling to a second tap on said winding and producing at an output thereof a signal in response to signal components at twice said first frequency present at the input thereof and suppressing signal components at said first frequency present at the input thereof; and

second phase sensative detector means for coupling to said excitation signal source and coupled to said second electrical circuit means output for detecting the amplitude of the signal at said second electrical circuit filter means output at a phase fixed with respect to said driving signal.

3. The signal conditioner circuit of claim 2 wherein said first and second electrical filter circuits comprise bandpass filters having a passband including the frequency of twice said first frequency.

4. The signal conditioner circuit of claim 2 further comprising first circuit means for coupling to said excitation signal source and removing by cancellation a portion of the signal components at said first frequency which would otherwise be present at the outputs of said first and second electrical filter circuit means.

5. A signal conditioner circuit for use with a second harmonic, saturable core transducer comprised of a magnetically saturable core, a magnetic rotor mounted for rotation with respect to said core, and a winding with two taps located thereon disposed about said core and adapted for connection to an excitation signal source providing an alternating current driving signal to said winding at a first frequency, said signal conditioner circuit comprising:
first electrical amplifier and bandpass circuit means for coupling to a first tap on said winding and having a pass band including the frequency of twice said first frequency; second electrical amplifier and bandpass circuit means for coupling to a second tap on said winding and having a pass band including the frequency of twice said first frequency; and phase sensative detections means for coupling to said excitation signal source and outputs of said first and second electrical amplifier and bandpass means for detecting the amplitudes of the signals at the outputs of said first and second electrical amplifier and bandpass circuit means at phases fixed with respect to said driving signal.

6. The signal conditioner circuit of claim 5 wherein said detection phases are at approximately 45 degrees with respect to the zero crossings of said driving signal.

7. The signal conditioner circuit of claim 6 further comprising circuit means for coupling said excitation signal source to said first and second electrical amplifier and bandpass circuit means and removing by cancellation a portion of the signal components at said first frequency which would otherwise be present at the outputs of said first and second electrical amplifier and bandpass circuit means.

8. The signal conditioner circuit of claims 6 wherein said circuit further comprises bandpass filter and phase shift circuit means having a pass band including said first frequency and shifting the phase of signals at said first frequency applied thereto by approximately 45 degrees for coupling said excitation signal source to said phase sensative detection means.

9. The signal conditioner circuit of claim 8 wherein said phase sensitive detection means further comprises a zero-crossing detector circuit coupled to the output of said bandpass filter and phase shift circuit means and sampling circuit means coupled to the outputs of said zero-crossing detector and said first and second electrical amplifier and bandpass circuit means for sampling the signals at the outputs of said first and second electrical amplifier and bandpass circuit means in response to output signals from said zero crossing detector circuit.

10. The signal conditioner circuit of claim 9 wherein said sampling circuit means comprises a first sampler circuit coupled to the output of said first electrical amplifier and bandpass circuit means and a second sampler circuit coupled to the output of said second electrical amplifier and bandpass circuit means, each sampler sampling the signals applied thereto in response to output signals from said zero-crossing detector.

11. The signal conditioner circuit of claim 10 further comprising polarity inverting circuit means having an input coupled to said excitation signal source and an output coupled to said first and second amplifier and bandpass filter circuit means for providing at said output a signal reversed in polarity from the signal applied to the input thereof.

FIG. IA

FIG. IB

FIG. 2

0010303

## DOCUMENTS CONSIDERED TO BE RELEVANT

| Category | Citation of document with indication, where appropriate, of relevant passages | Relevant to claim |
|---|---|---|
| X | US - A - 3 575 616 (JORDAN)  <br> * Abstract; figures; column 1, line 49 – column 3, line 19 * | 1,2,4-8 |
|  | IEEE TRANSACTIONS ON INSTRUMENTATION AND MEASUREMENT, vol. IM-26, no. 4, December 1977, pages 377-383 <br> New York, U.S.A. <br> WADA et al.: "A Novel Displacement Transducer Using the Second-Harmonic Type of Magnetic Modulator" <br> * Page 380, column 2, lines 13-30; figure 7 * | 1-3,5 |
| A | GB - A - 602 352 (BENDIX) <br> * Claims; figures * | 1,5 |

**CLASSIFICATION OF THE APPLICATION (Int. Cl.)**

G 08 C 19/40
G 01 D 5/20

**TECHNICAL FIELDS SEARCHED (Int.Cl. 3)**

G 01 D 5/20
5/22
5/243
G 08 C 19/40

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-01-1980 | LLOYD |

EPO Form 1503.1   06.78